Europäisches Patentamt

European Patent Office

Office européen des brevets

(19)

(11) Numéro de publication : **0 061 944**
**B1**

(12) **FASCICULE DE BREVET EUROPÉEN**

(45) Date de publication du fascicule du brevet :
05.06.85

(21) Numéro de dépôt : 82400319.8

(22) Date de dépôt : 23.02.82

(51) Int. Cl.⁴ : **B 60 G 7/02**, B 60 G 21/04, B 60 G 11/12

(54) **Train de roues pour véhicule.**

(30) Priorité : 30.03.81 FR 8106280

(43) Date de publication de la demande :
06.10.82 Bulletin 82/40

(45) Mention de la délivrance du brevet :
05.06.85 Bulletin 85/23

(84) Etats contractants désignés :
DE GB IT

(56) Documents cités :
EP-A- 0 034 531
DE-B- 1 265 598
DE-C- 928 449
FR-A- 1 145 368
FR-A- 1 550 058
FR-A- 1 553 141
FR-A- 2 392 839
FR-A- 2 393 690
FR-A- 2 400 441
FR-E- 42 124
GB-A- 2 041 845
US-A- 4 257 623

(73) Titulaire : AUTOMOBILES PEUGEOT
75, avenue de la Grande Armée
F-75116 Paris (FR)

AUTOMOBILES CITROEN
62 Boulevard Victor-Hugo
F-92200 Neuilly-sur-Seine (FR)

(72) Inventeur : Froumajou, Armand
Rue du Docteur Laennec
F-95520 Osny (FR)

(74) Mandataire : Moncheny, Michel et al
c/o Cabinet Lavoix 2 Place d'Estienne d'Orves
F-75441 Paris Cedex 09 (FR)

Jouve, 18, rue St-Denis, 75001 Paris, France

Description

La présente invention se rapporte aux trains de roues, notamment arrière, de véhicules automobiles, à deux bras longitudinaux dont une extrémité porte une roue et dont l'autre extrémité est articulée sur la structure du véhicule dans un palier d'axe transversal.

Pour maintenir le parallélisme des roues propre à assurer une bonne stabilité de roulage du véhicule, il est connu de relier entre eux les deux bras, à proximité de leur axe d'articulation, par une traverse d'essieu assez flexible en torsion pour permettre une indépendance d'oscillation des bras, et assez rigide en flexion pour s'opposer à toute inclinaison transversale des bras. Dans une telle disposition, les paliers généralement souples ou liés élastiquement à la structure, peuvent être de petites dimensions car ils n'ont pas à supporter les couples de forces appliqués aux bras autour d'axes verticaux ou longitudinaux, grâce à la rigidité transversale de l'ensemble formé par les bras et la traverse d'essieu.

Il est par ailleurs connu de relier chaque bras à la structure du véhicule par un ressort de suspension constitué par une barre de torsion transversale dont les deux extrémités sont ancrées respectivement l'une sur le bras, et l'autre sur un support élastiquement lié à la structure ; ce support est généralement constitué d'au moins une traverse reliant deux éléments latéraux qui portent chacun un moyen d'ancrage pour l'une des barres de torsion et l'un des paliers d'articulation de bras. Cette disposition présente l'avantage de former une unité de suspension aisément amovible.

Une juxtaposition des deux dispositions susmentionnées présenterait l'inconvénient d'être lourde et relativement encombrante à cause de la présence de deux traverses : celle reliant les bras entre eux, et celle du support.

On connaît également d'après le brevet GB-A-2.041.845 une suspension du type à traverse et bras de suspension solidaires de cette traverse, dans laquelle chaque bras est articulé dans un palier d'axe transversal porté par un support relié par des moyens élastiques à la structure du véhicule. Cette suspension comprend également des ressorts hydro-pneumatiques associés à chaque couple de bras et de support. De tels ressorts hydro-pneumatiques sont cependant encombrants et coûteux et ils augmentent l'inertie des masses non suspendues, ce qui est défavorable.

L'invention a pour but de réaliser un train de roues à deux bras longitudinaux, qui forme un sous-ensemble ou une unité amovible, relativement léger et peu coûteux et qui soit avantageux au plan de l'inertie des masses non suspendues.

Elle concerne donc un train de roues pour véhicule, comprenant deux bras de suspension longitudinaux liés rigidement à une traverse ayant une capacité de déformation en torsion mais rigide en flexion, chaque bras étant articulé dans un palier d'axe transversal relié à la structure du véhicule, chaque palier étant porté par un support latéral relié par des moyens de fixation élastique à la structure du véhicule, caractérisé en ce que deux barres de torsion s'étendant à peu près transversalement sont ancrées respectivement d'une part sur l'un des bras de suspension, d'autre part sur le support latéral opposé dans ou au voisinage de l'axe dudit palier.

Les moyens de fixation de chaque support sur la structure sont de préférence constitués de deux blocs en élastomère notablement espacés en direction longitudinale ; l'un d'eux est placé à proximité du palier d'articulation du bras de suspension correspondant et comporte une portion d'appui transversal entre le support et la structure.

Un organe de suspension tel qu'un amortisseur télescopique prend appui ou s'articule, d'une part, sur la traverse, à proximité de sa liaison avec l'un des bras, d'autre part, sur le support correspondant.

Il résulte de ces dispositions que tous les efforts importants que transmettent les ressorts et éventuellement les amortisseurs restent internes au train de roues et sont transmis à la structure par les moyens de fixation élastique propres à filtrer les vibrations dues au roulage des roues sur le sol ; par ailleurs, la traverse assure non seulement le maintien de l'écartement et du parallélisme des roues, mais aussi la liaison des deux supports latéraux, de sorte que l'ensemble ainsi constitué forme une unité aisément amovible liée à la structure uniquement par lesdits moyens de fixation.

Il est donné ci-après description d'un mode de réalisation particulier de l'invention, avec référence aux dessins annexés dont :

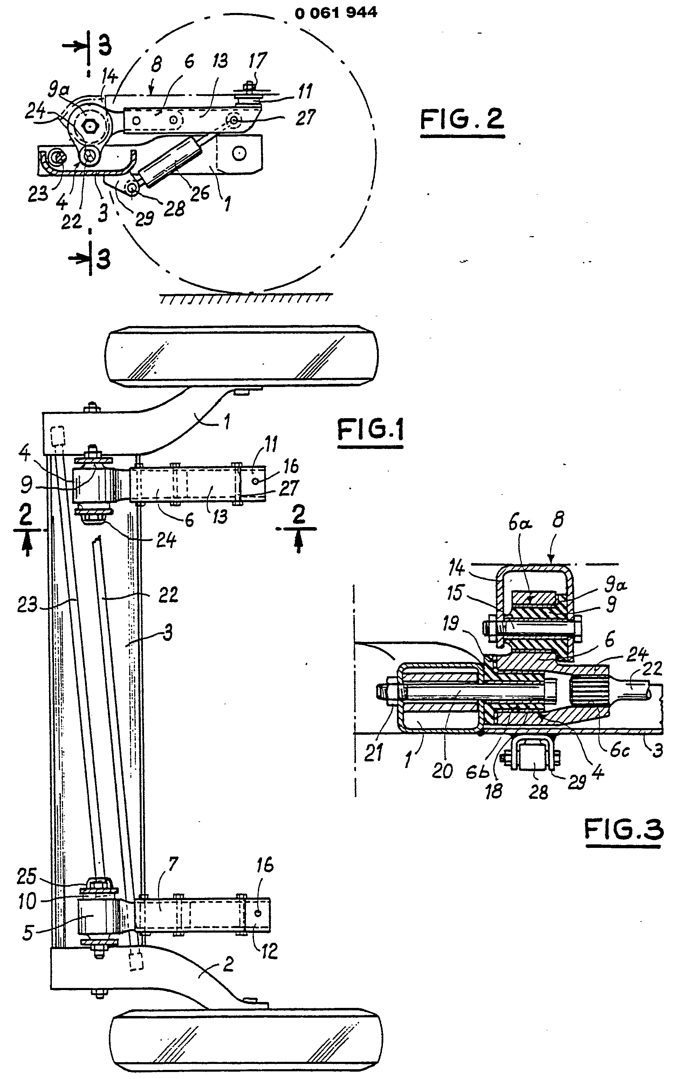

la Figure 1 est une vue de dessus d'un train de roues arrière de véhicule ;

la Figure 2 est une vue latérale en coupe suivant la ligne 2-2 de la Fig. 1, et

la Figure 3 est une vue partielle en coupe suivant la ligne 3-3 de la Fig. 2, à plus grande échelle.

Dans le train de roues considéré, les deux roues sont portées respectivement par deux bras longitudinaux 1, 2 rigidement liés, par exemple par soudure, aux deux extrémités d'une traverse 3 ; à proximité de celle-ci, chaque bras s'articule dans un palier 4, 5 d'axe transversal porté par un support latéral 6, 7 propre à être fixé à la structure 8 du véhicule par des blocs élastiques avant 9, 10 et arrière 11, 12.

Chaque bloc avant 9, 10 est constitué d'un manchon en élastomère emmanché dans un alésage 6a du support 6, 7 et est muni d'une collerette 9a en appui axial contre une face du support 6. Chaque bloc arrière 11, 12 est parallélépipédique et solidaire d'un prolongement 13 du support 6, 7, de sorte que les blocs arrière sont notablement espacés des blocs avant en direction longitudinale. Chaque manchon 9, 10 est propre à être engagé dans un étrier 14 de la structure 8, et à y être maintenu par un boulon 15 le traversant axialement : chaque bloc arrière 11, 12 comporte une tige filetée 16 permettant sa fixation contre une paroi de la structure au moyen d'un écrou 17.

Chaque palier 4, 5 comporte un tourillon 18, en matériau à faible coefficient de frottement, muni d'une collerette 19 en appui axial contre une face du support 6, et traversé axialement par une tige 20 qui traverse aussi le bras 1 et dont une extrémité filetée reçoit un écrou 21 assurant le serrage du tourillon 18 contre le bras 1. Le tourillon 18 tourne librement dans un alésage 6b du corps 6. Les alésages 6a et 6b sont parallèles à la traverse 3 et disposés au plus près l'un de l'autre.

Sur chaque bras est ancrée, de manière usuelle quelconque, l'extrémité d'une barre de torsion 22, 23 dont l'autre extrémité est ancrée dans une portion 24, 25 du support opposé 6, 7 ; plus précisément, cette autre extrémité est dentelée et engagée dans un trou 6c de forme complémentaire réalisé dans le support, à peu près coaxialement à l'alésage 6b de manière à servir de passage pour la tige 20 lors de son montage qui précède celui de la barre de torsion correspondante. Les barres 22, 23 sont représentées comme faisant un certain angle par rapport à la direction transversale. Elles pourraient cependant être disposées transversalement, par exemple en décalant longitudinalement l'un par rapport à l'autre les deux paliers 4, 5 ou en disposant les portions d'ancrage 24, 25 légèrement en avant ou en arrière de ces paliers.

Un amortisseur télescopique 26 est lié par une articulation supérieure 27 au prolongement 13 du support 6, de préférence à la partie arrière de ce prolongement, et par une articulation inférieure 28 à une patte 29 soudée sur la traverse 3, à proximité de l'extrémité de cette traverse reliée · au bras 1 correspondant. Une disposition identique est bien entendu prévue pour l'autre bras de suspension.

L'ensemble du train de roues ainsi réalisé forme un sous-ensemble fixé à la structure 8 uniquement par deux écrous 17 et par deux boulons 15, et est donc aisément amovible.

Son maintien transversal est assuré par appui axial de chaque collerette 9a contre l'étrier 14 correspondant, sans risque de basculement des supports 6, 7 grâce à la proximité des alésages 6a, 6b et donc des axes de chaque palier 4, 5 et du bloc avant 9, 10 associé, et grâce à la rigidité de l'ensemble formé par la traverse 3 et les deux bras 1, 2.

Le maintien longitudinal et vertical est assuré par les blocs élastiques 9, 10, 11, 12 dont la flexibilité peut être choisie, de manière connue, pour autoriser de légers débattements longitudinaux des roues par rapport à la structure. Les couples de forces autour d'axes transversaux exercés sur le sous-ensemble, et dus notamment au freinage des roues, sont transmis à la structure par les blocs élastiques avant et arrière, avec de faibles contraintes puisque ceux-ci sont notablement espacés en direction longitudinale. Les couples de forces autour d'axes longitudinaux et verticaux exercés sur les bras 1, 2 et dus aux forces transversales entre roue et sol, notamment lorsque le véhicule rouge en virage, ne provoquent, grâce à la rigidité en flexion de la traverse 3 et grâce à l'écartement important des deux supports 6, 7, qu'une légère contrainte sur les blocs élastiques 9, 10, 11, 12. Il n'en résulte pas de déviation sensible du sous-ensemble, ce qui se traduit par une bonne stabilité de roulage et donc une bonne tenue de route du véhicule.

De plus, l'inertie de rotation de la masse non suspendue est faible grâce à la position de la traverse et des barres de torsion proche des axes des paliers 4, 5, ce qui est tout à fait favorable.

**Revendications**

1. Train de roues pour véhicule, comprenant deux bras de suspension longitudinaux (1, 2) liés rigidement à une traverse (3) ayant une capacité de déformation en torsion mais rigide en flexion, chaque bras étant articulé dans un palier (4, 5) d'axe transversal relié à la structure du véhicule, chaque palier étant porté par un support latéral (6, 7) relié par des moyens de fixation élastique (9, 10, 11, 12) à la structure du véhicule, caractérisé en ce que deux barres de torsion (22, 23) s'étendant à peu près transversalement sont ancrées respectivement d'une part sur l'un des bras de suspension (1, 2), d'autre part sur le support latéral opposé (7, 6) dans ou au voisinage de l'axe dudit palier (5, 4).

2. Train de roues suivant la revendication 1, caractérisé en ce que le support comporte deux logements coaxiaux (6b, 6c), communiquant entre eux et recevant, respectivement, un tourillon (18) fixé au bras de suspension et l'extrémité d'une barre de torsion (22).

3. Train de roues suivant la revendication 2, caractérisé en ce que le deuxième logement (6c), recevant l'extrémité de la barre de torsion (22) a un diamètre suffisant pour permettre le passage d'un organe de fixation (20) entre le bras de suspension (1) et le tourillon (18).

4. Train de roues suivant la revendication 1, caractérisé en ce que chaque support (6, 7) est relié à la structure du véhicule par deux blocs ou éléments élastiques (9, 11 ; 10, 12) espacés longitudinalement.

5. Train de roues suivant la revendication 4, caractérisé en ce que le bloc élastique (9, 10) situé le plus près du palier correspondant comprend un manchon en élastomère muni d'une collerette (9a) interposée entre deux surfaces d'appui transversal entre le support et la structure du véhicule.

6. Train de roues suivant l'une quelconque des revendications 1 à 5, caractérisé en ce qu'un amortisseur (26) est monté entre la traverse (3) et chaque support (6, 7).

7. Train de roues suivant la revendication 6, caractérisé en ce que chaque support (6, 7) est réalisé en deux parties, une partie avant sur laquelle est articulé un bras de suspension et sur laquelle est ancré un ressort de suspension et un prolongement arrière (13) sur lequel est fixé l'amortisseur (26).

**Claims**

1. A set of wheels for a vehicle, comprising two longitudinal suspension arms (1, 2) rigidly connected to a cross-member (3) capable of deforming in torsion but rigid as concerns bending, each arm being pivotally mounted in a bearing (4, 5) having a transverse axis and connected to the structure of the vehicle, each bearing being carried by a lateral support (6, 7) connected by elastic fixing means (9, 10, 11, 12) to the structure of the vehicle, characterised in that two torsion bars (22, 23) extending roughly transversely are respectively anchored, on one hand, on one of the suspension arms (1, 2) and, on the other hand, on the opposed lateral support (7, 6) in or in the vicinity of the axis of said bearing (5, 4).

2. A set of wheels according to claim 1, characterised in that the support comprises two coaxial passages (6b, 6c) which communicate with each other and respectively receive a journal (18) fixed to the suspension arm and the end of a torsion bar (22).

3. A set of wheels according to claim 2, characterised in that the second passage (6c) receiving the end of the torsion bar (22) has sufficient diameter to permit the passage of a fixing element (20) between the suspension arm (1) and the journal (18).

4. A set of wheels according to claim 1, characterised in that each support (6, 7) is connected to the structure of the vehicle by two elastic elements or blocks (9, 11 ; 10, 12) longitudinally spaced apart.

5. A set of wheels according to claim 4, characterised in that the elastic block (9, 10) located the closest to the corresponding bearing comprises a sleeve of elastomer provided with a flange (9a) interposed between two transverse bearing surfaces between the support and the structure of the vehicle.

6. A set of wheels according to any one of the claims 1 to 5, characterised in that a shock-absorber (26) is mounted between the cross-member (3) and each support (6, 7).

7. A set of wheels according to claim 6, characterised in that each support (6, 7) is made in two parts, a front part on which is pivotally mounted a suspension arm and on which is anchored a suspension spring and a rear extension (13) on which the shock-absorber (26) is fixed.

**Patentansprüche**

1. Fahrzeug-Radsatz, mit zwei sich in Längsrichtung erstreckenden Aufhängungsarmen (1, 2), welche fest mit einem Querlenker (3) verbunden sind, der sowohl torsionsverformbar als auch biegesteif ist, wobei jeder Arm in einem mit dem Fahrzeugrahmen verbundenen Querachslager (4, 5) angelenkt ist und jedes Lager in einer seitlichen Halterung (6, 7) angeordnet ist, die mit Hilfe elastischer Befestigungsmittel (9, 10, 11, 12) mit dem Fahrzeugrahmen verbunden ist, dadurch gekennzeichnet, daß zwei sich im wesentlichen quer erstreckende Torsionsstäbe (22, 23) jeweils an einem der Aufhängungsarme (1, 2) und an der gegenüberliegenden seitlichen Halterung (7, 6) in oder in der Nähe der Achse des Lagers (5, 4) befestigt sind.

2. Radsatz nach Anspruch 1, dadurch gekennzeichnet, daß die Halterung zwei miteinander in Verbindung stehende koaxiale Aufnahmen (6b, 6c) jeweils für einen am Aufhängungsarm befestigten Zapfen (18) und für das Ende eines Torsionsstabes (22) aufweist.

3. Radsatz nach Anspruch 2, dadurch gekennzeichnet, daß die zweite Aufnahme (6c) für das Ende des Torsionstabes (22) einen genügend großen Durchmesser für die Hindurchführung eines Befestigungselementes (20) zwischen dem Aufhängungsarm (1) und dem Zapfen (18) aufweist.

4. Radsatz nach Anspruch 1, dadurch gekennzeichnet, daß die Halterungen (6, 7) jeweils durch zwei in Längsrichtung im Abstand voneinander angeordnete elastische Elemente (9, 11 ; 10, 12) am Fahrzeugrahmen befestigt sind.

5. Radsatz nach Anspruch 4, dadurch gekennzeichnet, daß das dem jeweiligen Lager am nächsten befindliche elastische Element (9, 10) eine Manschette aus einem Elastomeren mit einem Bund (9a) umfaßt, der zwischen zwei quer verlaufenden Anlageflächen zwischen der Halterung und dem Fahrzeugrahmen angeordnet ist.

6. Radsatz nach einem der Ansprüche 1 bis 5, dadurch gekennzeichnet, daß ein Stoßdämpfer (26) zwischen dem Querlenker (3) und den Halterungen (6, 7) vorgesehen ist.

7. Radsatz nach Anspruch 6, dadurch gekennzeichnet, daß jede der Halterungen (6, 7) aus zwei Teilen besteht, nämlich einem vorderen Teil, an dem ein Aufhängungsarm angelenkt sowie eine Aufhängefeder befestigt ist und einem sich nach rückwärts verlängernden Teil (13), an welchem der Stoßdämpfer (26) angeordnet ist.

FIG.2

FIG.1

FIG.3